# EUROPEAN PATENT APPLICATION

(11) **EP 2 085 410 A1**
(43) Date of publication of application: **05.08.2009**
(21) Application number: 08150797.2
(22) Date of filing: 29.01.2008
(51) Int. Cl.: C08F 257/02, C08F 279/02, D21H 19/20

(54) **Polymer latex for paper coating**

(71) Applicant: DOW GLOBAL TECHNOLOGIES INC., Midland MI 48674 (US)
(72) Inventor: Salminen, Pekka, 8854 Galgenen (CH); Sandas, Stefan E., 02160 Espoo (FI); Dobler, Francis, 67410 Drusenheim (FR); Lazarus, Etienne, 67500 Marienthal (FR); Burgert, Josef H., 77855 Achern (DE)
(74) Representative: Raynor, John

(57) **Abstract**

A polymer latex for paper coating, in particular, for coating surfaces to be printed by rotogravure printing processes is prepared by
(a) polymerising a first monomer mixture in a first polymerisation step, to produce a first polymer latex, the first monomer mixture comprising,
(i) from 23 to 65 wt % of an ethylenically unsaturated aromatic monomer,
(ii) from 0.5 to 7 wt% of an ethylenically unsaturated carboxylic acid, and
(iii) from 30 to 70 % of a conjugated diene,

based on the total of components (i), (ii) and (iii),
and
(b) further polymerising a second monomer mixture in the presence of the first polymer latex in a second polymerisation step, the second monomer mixture comprising (based on the second monomer mixture),
(i) from 0 to 35 wt % of an ethylenically unsaturated aromatic monomer,
(ii) from 0.5 to 7 wt% of an ethylenically unsaturated carboxylic acid, and
(iii) from 5 to 99.5 wt%, of an alkyl acrylate or methacrylate,

wherein the weight of the monomers polymerized in the first step account for 25 to 95 % of the total monomer weight of the first and second monomer mixtures.

## Description

This invention relates to polymer latexes, and in particular to polymer latexes for paper coating. The polymer latexes in accordance with the invention are particularly suitable for coating surfaces to be printed by rotogravure printing processes.

One type of composition typically used for paper coating applications of this general kind is styrene/butadiene (SB) copolymer latexes prepared by polymerisation of styrene and butadiene.

For rotogravure applications, acrylates (for example butylacrylate) are typically incorporated into the composition, in order to improve printability.

Although acrylate-containing latexes generally provide good printability their binding strength leaves something to be desired. Latexes that are high in styrene/butadiene give higher binding strength, but at the expense of printability, particularly in rotogravure printing. In general attempts to increase printability results in binding strength reduction and vice-versa.

An article in Journal of Applied Polymer Science ((1997), 65(3), p511-523" Grafting behaviour of n-butyl acrylate onto (butadiene-co-styrene) latexes" Y.HE, E.S. Daniels, A. Klein and M. S. El-Aasser*)* describes core shell latex systems obtained by radical-induced grafting of butylacrylate onto poly(butadiene-co-styrene) latexes during seeded emulsion polymerization. The described process involves two separate steps. First a styrene-butadiene latex containing high levels of butadiene (90 parts) is prepared at 60-70 °C using redox initiators. The polymerization process is slow and requires 7 to 20 hours to achieve 50% conversion (figure1). The gel content is controlled by terminating the reaction at low monomer conversion (27 and 57%, see figure 2) and flash evaporating the unreacted monomers. The SB latex is then swollen with the second stage monomer (usually butylacrylate) and the polymerization is reinitiated. The latexes do not contain carboxylic acids or unsaturated nitriles.

US-A-4477535 and US-A-4413068 disclose polymer latexes produced using staged monomer feeds in two separate steps, to produce a two-phase product. Both phases contain essentially the same monomers (styrene/butadiene/carboxylic acid and a primary amide). A first phase, (referred to herein as the "first feed phase"), having a relatively low Tg (and thus is what is conventionally referred to as a "soft phase") results from the polymerisation in the first step, and a second phase (referred to herein as the "second feed phase") having a relatively high Tg (and thus is what is conventionally referred to as a "hard phase") results from the polymerisation in the second step. The first feed phase generally forms a "core" portion, and the second feed phase generally forms a "shell" portion of the latex particles. The preferred ratio of the first feed phase to the second feed phase is 50:50 wt%.

None of the known compositions is able to provide high binding strength, at the same time high printability, particularly when used as a binder for rotogravure printing.

According to the invention, there is provided process for preparing a polymer latex, comprising
(a) polymerising a first monomer mixture in a first polymerisation step, to produce a first polymer latex, the first monomer mixture comprising (based on the first monomer mixture),
   (i) from 23 to 65 wt % of an ethylenically unsaturated aromatic monomer,
   (ii) from 0.5 to 7 wt% of an ethylenically unsaturated carboxylic acid, and
   (iii) from 30 to 70 % of a conjugated diene,
   the said percentages being based on the total of components (i), (ii) and (iii), and
(b) further polymerising a second monomer mixture in the presence of the first polymer latex in a second polymerisation step, the second monomer mixture comprising (based on the second monomer mixture),
   (i) from 0 to 35 wt % of an ethylenically unsaturated aromatic monomer,
   (ii) from 0.5 to 7 wt% of an ethylenically unsaturated carboxylic acid, and
   (iii) from 5 to 99.5 wt%, of an alkyl acrylate or methacrylate,
wherein the weight of the monomers polymerized in the first step account for 25 to 95 % of the total monomer weight of the first and second monomer mixtures.

In a further aspect of the invention, there is provided a polymer latex, preparable by a method as described above, and a coated substrate for use a rotogravure printing process, producible by coating a substrate with such a latex, according to claim 8. A further aspect of the invention provides use of a such latex in accordance as a coating for a substrate to be coated by a rotogravure printing process.

In contrast to the method described in US-A-4477535 and US-A-4413068, the process of the invention essentially produces a polymer latex in which both the first and the second monomer feed phase, have a relatively low Tg, (i.e., they are both "soft" phases). As used herein, the term ""soft phase" is intended to mean a phase having a Tg of not more than 10 °C. Tg can be measured experimentally, using differential scanning calorimetry (DSC). In practice, however, separate Tgs for the separate phases can be difficult to resolve by DSC, and in preference therefore, Tg of the respective phases is calculated from the composition of the respective polymer phase, using the well-known Fox equation described in Bulletin of American Physics Society, Vol.1, Issue3, page 123 (1956).

The fact that the second feed phase of the latex particles is constituted by a soft phase gives rise to a significant improvement in the suitability of the polymer latexes for rotogravure printing applications.

For the purposes of the present invention, the term "copolymer" means a polymer formed from at least 2 monomers. A synthetic latex, as is well known, is an aqueous dispersion of polymer particles, typically prepared by emulsion polymerization of one or more monomers

The amounts of the monomers employed in the first and second polymerization steps are such that at least 25%, preferably at least 50% by weight of the monomer incorporation takes place in the first polymerization step. In particular embodiments, at least 60%, more preferably at least 70% and most preferably at least 75% by weight of the monomers present in the final polymer latex may be polymerised in the first polymerisation step.

The ethylenically unsaturated aromatic monomer is preferably a monovinyl or vinylidene aromatic monomer of the formula CH₂=CR-Ar, wherein R is hydrogen or C₁₋₄ alkyl and Ar is a C₆ aromatic radical which is optionally substituted by at least one C₁₋₄ alkyl group, or chlorine or bromine. Preferred ethylenically unsaturated aromatic monomers are styrene, alpha-methyl styrene, vinyl toluene, and C₁₋₄ alkyl and chloro and bromo derivatives thereof. The most preferred is styrene.

The amount of the ethylenically unsaturated aromatic monomer in the first monomer mixture is from 23 to 65 wt %, preferably from 23 to 45 %, more preferably from 30 to 40%, based on the monomers in first monomer mixture.

The amount of ethylenically unsaturated aromatic monomer to be used in the second monomer mixture depends to some extent on the ratio of first to the second monomer mixtures. In general terms, the amount of ethylenically unsaturated aromatic monomer in the second monomer mixture is preferably from 10-30 wt%. When the second monomer feed phase constitutes a relatively small proportion (for example, from 5 to 10% by weight) of the product, the amount of ethylenically unsaturated aromatic monomer in the second monomer mixture can be relatively low, for example 5 wt % or less, and it may even be omitted entirely. When the second monomer feed phase constitutes a higher proportion (for example, from 20 to 25% by weight) of the product, the inclusion of an ethylenically unsaturated aromatic monomer (such as styrene) in the second monomer mixture is desirable, as it helps to decrease the amount of crosslinking within the second phase. The higher the ratio of the second to the first phase, the higher is the preferred amount of the ethylenically unsaturated aromatic monomer in the second phase. It is particularly preferred that when the second phase constitutes from 20 to 25% of the latex the amount of ethylenically unsaturated aromatic monomer in the second monomer mixture is preferably from 10-30 wt%.

The conjugated diene constitutes from 30 to 70 wt%, more preferably from 35 to 65 wt% still more preferably from 50 to 65 wt%, typically from 55-60 wt% of the first monomer mixture. The conjugated diene is preferably a C₄₋₆ aliphatic conjugated diene, for example 1,3 butadiene, 2-methyl-1,3-butadiene or a chlorinated butadiene. The preferred conjugated dienes are 1,3 butadiene and isoprene, particularly 1,3 butadiene.

The first monomer mixture may also include an unsaturated nitrile, for example acrylonitrile. The unsaturated nitrile may be used in an amount of from 0.5 to 7.5% by weight, based on the first monomer mixture.

Likewise, the second monomer mixture may also include an unsaturated nitrile, for example acrylonitrile. The unsaturated nitrile may be used in an amount of from 0.5 to 7.5% by weight, based on the second monomer mixture.

Both the first and second monomer mixtures contain an ethylenically unsaturated carboxylic acid, for example acrylic acid. The ethylenically unsaturated carboxylic acid increases the reaction rate, allowing a higher monomer conversion to be achieved in a shorter time, as well as increasing the stability of the product. The amount of ethylenically unsaturated carboxylic acid is from 0.5 to 7% by weight, preferably from 2 to 5%, more preferably from 3 to 4%, based on the respective monomer mixture. The ethylenically unsaturated carboxylic acid is preferably a C₃₋₆ ethylenically unsaturated carboxylic acid, and may contain one or two carboxylic acid groups. Suitable acids include itaconic acid, fumaric acid, maleic acid, acrylic acid and methacrylic acid. A mixture of two or more such acids may be employed.

Either or both monomer mixtures may also preferably contain a chain transfer agent, in order to improve control of the molecular weight of the polymer product. Suitable chain transfer agents for free radical polymerisation are well known to one of skill in the art, and include, for example, the alkyl-mercaptans, such as tertiary-dodecyl mercaptan (TDDM), n-dodecyl mercaptan, and n-octyl mercaptan, carbon tetrachloride, carbon tetrabromide, or triphenylmethane. The preferred chain transfer agent is tertiary dodecyl mercaptan. The chain transfer agent may be used in an amount of from 0.1 to 2 wt%, preferably about 1.5 wt%, based on the monomer content in the combined monomer feeds.

The monomers in the second monomer mixture may be added directly to the reaction product of first step, without separation of residual monomer or the reaction product.

The second monomer mixture also contains from 5 to 99.5 wt%, preferably from 60 to 85 wt%, more preferably from 60 to 80 wt%, of an alkyl acrylate or methacrylate (abbreviated herein to alkyl(meth)acrylate). The amount of the alkyl (meth)acrylate has a significant effect on the printability of paper coated with the resulting latex composition, particularly by rotogravure printing processes. Suitable alkyl (meth)acrylates for use in accordance with the invention are (C₁-C₂₀) alkyl esters of acrylic or methacrylic acid, for example methylacrylate, methyl methacrylate, ethylacrylate, ethyl methacrylate, butylacrylate, butyl methacrylate, 2-ethylhexylacrylate or 2-ethyl-hexyl methacrylate. Mixtures of two or more alkyl acrylates may also be used. Butylacrylate is preferred.

The level of crosslinking, expressed as gel content of the latex, is at least below 85%, preferably below 80%. This can be measured by extracting the non crosslinked polymer fraction of a latex film with toluene or another suitable solvent, and determining the crosslinked fraction gravimetrically.

After preparation, the pH of the latex may be adjusted to the basic range using suitable bases such as sodium or potassium hydroxide or ammonia, and conventional thickeners and bactericides may be added. These adjustments are well known to those skilled in the art.

At least in its preferred embodiments, the polymer latex in accordance with the invention is able to provide excellent printability, particularly in rotogravure processes while maintaining excellent binding strength.
A number of preferred embodiments of the invention are described in the following Examples.

### Example 1

A polymer latex is prepared in a two stage polymerization process, using a 1 gallon (3.8 litre) reactor. The first feed constitutes 75 wt% of the total monomer feed, and comprises styrene, butadiene, acrylonitrile, and acrylic acid monomers, in the amount shown in Table 1. The second feed constitutes 25 wt% of the total monomer feed, and comprises butylacrylate, styrene, and acrylic acid monomer, also in the amounts shown in Table 1.

The polymerization is carried out using an initial polystyrene seed latex having a volume average particle size of 0.0215 µm, in an amount corresponding to 0.41 parts per 100 parts of total monomer to be polymerized. The seed latex is added to an initial aqueous medium containing itaconic acid, 75 parts deionized water and 0.02 parts of a chelating agent (pentasodium salt of diethylenetriamine penta-acetic acid). The first monomer feed is started, and the reaction mixture is agitated during monomer addition at a rate of 215 rpm. An additional aqueous stream containing initiator, and consisting of 16 parts distilled water, 1.0 parts sodium dodecyldiphenyl oxide sulfonate, 0.23 parts sodium hydroxide and 1.0 parts sodium persulfate is also added continuously over a 320 minutes period.

The first feed is added to the initial aqueous medium in a continuous manner over a period of 225 minutes while the reaction mixture is held at 80°C. The butadiene feed is then stopped, and feeding of the remaining monomers of the first feed is continued with stirring for a further 20 minutes at the same temperature.

Following complete addition of first feed monomer the second monomer feed is initiated, and is fed in a continuous manner over a 45 minutes period while the reaction mixture is held at 80°C, to produce a two phase polymer latex.
In addition to the monomers listed a chain transfer agent (tertiary dodecylmercaptane or "TDDM") was incorporated in the first and second monomer feeds, in an amount of 1.5 wt% based on total monomers, with 92% of the TDDM added in the first feed, and 8% in the second feed.

**TABLE 1**

| | **First monomer feed Examples 1, 2, and 3 (parts by wt)** | **Second monomer feed Examples 1 and 2 (parts by wt)** | **Second monomer feed Example 3 (parts by wt)** |
|---|---|---|---|
| Butadiene | 53.4 | | |
| Styrene | 38.6 | 26 | 13 |
| Acrylonitrile | 4 | | |
| Acrylic acid | 3 | 4 | 4 |
| Itaconic acid | 1 | | |
| Butylacrylate | | 70 | 83 |
| | | | |
| **Total** | **100** | **100** | **100** |

### Example 2

The procedure of Example 1 is repeated using a polymerisation temperature of 75°C.

### Example 3

The procedure of Example 2 is repeated using the same monomer composition for the first feed as Example 1 and the monomer composition for the second feed as shown in Table 1. In all three examples the first feed constitutes 75 wt% of the total monomer feed, and the second feed constitutes 25 wt% of the total monomer feed. Various properties of the compositions were measured.

Table 2 compares the "dry pick" and "helio" properties of the latexes of Examples 1, 2, and 3 with a commercially available acrylate latex, (Acronal S200™-Comparative Example 1) and with commercially available styrene butadiene latex (XZ 96482.00 from The Dow Chemical Company - Comparative Example 2).

The "dry pick" test measures the cohesive surface strength of a paper, and is carried out using an IGT ^{(™)} Printability Tester. In the test procedure, a paper strip is attached to a backing wheel. The paper is thereafter brought into contact with a printing disk onto which a standard test oil of a certain viscosity has been distributed in a standardised way. The backing wheel and the printing disk are caused to accelerate and the paper is thereby subjected to an increasing splitting force in the outgoing nip. The paper strip is thereafter detached from the backing wheel and inspected for surface failure under a microscope. The distance on the paper strip from the starting point of acceleration to the first failure in the surface corresponds to the speed during the acceleration. This speed is reported as the test result. A higher number corresponds to a higher cohesive strength of the paper to be tested.

The "helio" test measures the rotogravure printability of a paper, and is also carried out using an IGT ^{(™)} printability tester. A disc with engraved cups in its surface is utilized, together with a doctor blade that scrapes of excess ink, to transfer ink to the paper to be tested. The printed paper strip is inspected for ink that has not been transferred, (so called "missing dots"). The distance in mm on the paper strip from the starting point of ink transfer to 20 missing dots is reported as the test result. A higher number corresponds to better rotogravure printability.

Gel content is determined by extracting the non crosslinked polymer fraction of a latex film with toluene, and determining crosslinked fraction gravimetrically.

Gloss 75° is measured using the Zehntner™ ZLR 1050 apparatus. The gloss reading represents the percentage of light that is reflected by the paper surface when the light source and the corresponding detector are placed at a 75° angle to the paper surface. A higher number corresponds to higher reflectance, i.e. higher gloss.

**Table 2**

| **Formulation** | **Comp 1** | **Comp 2** | **Ex. 1** | **Ex. 2** | **Ex. 3** |
|---|---|---|---|---|---|
| IGT dry pick (cm/s) | 46 | 45 | 45 | 46 | 47 |
| Helio Test (Spring tension 177) mm | 69 | 73 | 76 | 82 | 84 |
| Paper Gloss 75° (%) | 63.1 | 64.9 | 66.8 | 65.6 | 67 |
| Crosslinking density (gel content in %) | 77 | 82 | 78 | 73 | 81 |

### Example 4

A polymer latex is prepared in accordance with using the general procedure of Example 1 by polymerizing a first phase monomer mixture consisting of 53.4 parts butadiene, 38.6 parts styrene, 4 parts acrylonitrile, 3 pts of acrylic acid, and 1 part of itaconic acid, and thereafter continuing the polymerization of the product in the presence of a second monomer mixture consisting of 92 parts butylacrylate, 4 parts acrylonitrile and 4 pts of acrylic acid. The first monomer feed also includes 1.7 wt% TDDM, based on the total monomers. Approximately 95% of particle weight of the resulting latex is comprised of monomers polymerized in the first phase, and approximately 5% of monomers polymerized in the second phase.

The properties of the latex are compared with Acronal S200™ and with a styrene butadiene latex (SB) prepared by the same process, but omitting butylacrylate from the second polymerization step. The results are shown in Table 3

**Table 3**

| | **Acronal S200** | **SB latex** | **Example 4** |
|---|---|---|---|
| IGT (cm/s) | 66 | 74 | 72 |
| Heliotest (mm) | 64 | 58 | 64 |

### Examples 5 and 6

Further polymer latexes are prepared, in order to demonstrate the effect of the two-stage polymerization process, as compared with a comparable single stage process. The latexes are prepared by polymerizing styrene, butadiene, acrylonitrile and butylacrylate by the general method described above, with the monomer amounts shown in Table 4.

Example 5 is in accordance with the two stage process of the invention. Comparative Example 5 uses the same monomer amounts, in a single stage polymerization. The suitability of the resulting latexes is compared using the Helio test.

**Table 4**

| | **Ex 5** | **Comp. Ex 5** |
|---|---|---|
| (% monomers) | | |

| **First monomer mixture** | | |
|---|---|---|
| Styrene | 38.5 | 28.9 |
| Butadiene | 53.5 | 40.1 |
| Acrylonitrile | 4 | 4 |
| Acrylic acid | 4 | 4 |
| Butylacrylate | 0 | 23 |
| | | |

| **Second monomer** | | None |
|---|---|---|
| Acrylonitrile | 4 | |
| Acrylic acid | 4 | |
| Butylacrylate | 92 | |
| monomers in first step/monomers in second step | 75/25 | |
| | | |

| **Total monomer** | | |
|---|---|---|
| Styrene | 28.9 | 28.9 |
| Butadiene | 40.1 | 40.1 |
| Acrylonitrile | 4 | 4 |
| Acrylic acid | 4 | 4 |
| Butylacrylate | 23 | 23 |
| | | |
| Helio printability | 70 | 62 |

It can be seen that the latex produced in the two stage process in accordance with the invention provides better rotogravure printability.

### Example 6

Latex preparation is carried out as in Example 4, except that the ratio first /second 75/25 wt%, instead of the 95/5 wt% used in Example 4. The feed amounts are shown in Table 5. The properties of the resulting latex are measured as before. The data for Example 4 is also shown in Table 5, for the purposes of easy comparison

As in Example 4, chain transfer agent (TDDM), is used during the first feed step only, in an amount of 1.7 parts per hundred, based on the total monomers in both phases. Polymerization temperature is 80°C. Particle size is identical in Examples 1 to 6.

**Table 5**

| | **Example 6** | | **Example 4** | |
|---|---|---|---|---|
| (parts by weight) | First monomer feed | Second monomer feed | First monomer feed | Second monomer feed |
| Butadiene | 53.4 | | 53.4 | |
| Styrene | 38.6 | | 38.6 | |
| Acrylonitrile | 4.0 | 4.0 | 4.0 | 4.0 |
| Acrylic Acid | 3.0 | 4.0 | 3.0 | 4.0 |
| Itaconic Acid | 1.0 | | 1.0 | |
| Butylacrylate | | 92.0 | | 92.0 |
| Total | 100 | 100 | 100 | 100 |
| Ratio of 1st to 2nd Monomer feed | 75/25 | | 95/5 | |
| IGT (cm/s) | 48 | | 72 | |
| Heliotest | 58 | | 64 | |
| Gel content | 91.0% | | 64.4% | |

Comparison of Example 6 with Examples 1, 2 and 3 (tables 1 and 2) shows that the presence of styrene in the second stage feed reduces gel content and improves printability. Comparison of Example 4 with Example 6 illustrates that printability is worse, when the second stage represents a higher fraction of the total polymer weight, unless styrene is incorporated in the second polymer feed.

The foregoing Examples are intended to be merely illustrative, and many alternative possibilities will be apparent to one of skill in the art, within the scope of the appended claims.

## Claims

1. A process for preparing a latex, comprising
(a) polymerising a first monomer mixture in a first polymerisation step, to produce a first polymer latex, the first monomer mixture comprising,
(i) from 23 to 65 wt % of an ethylenically unsaturated aromatic monomer,
(ii) from 0.5 to 7 wt % of an ethylenically unsaturated carboxylic acid, and
(iii) from 30 to 70 wt % of a conjugated diene,
the said percentages being based on the total of components (i), (ii) and (iii), and
(b) further polymerising a second monomer mixture in the presence of the first polymer latex in a second polymerisation step, the second monomer mixture comprising (based on the second monomer mixture),
(i) from 0 to 35 wt % of an ethylenically unsaturated aromatic monomer,
(ii) from 0.5 to 7 wt% of an ethylenically unsaturated carboxylic acid, and
(iii) from 5 to 99.5 wt%, of an alkyl acrylate or alkyl methacrylate,
wherein the weight of the monomers polymerized in the first step account for 25 to 95 % of the total monomer weight of the first and second monomer mixtures.

2. A process as claimed in Claim 1, wherein at least 60% of the monomers present in the final latex are polymerised in the first polymerisation step.

3. A process as claimed in Claim 2, wherein at least 70% of the monomers present in the final latex are polymerised in the first polymerisation step.

4. A process as claimed in any one of the preceding claims, wherein the amount of the conjugated diene employed in the first polymerisation step is at least 50 wt % based on the total of components (i), (ii) and (iii).

5. A process as claimed in any one of the preceding claims, wherein either or both of the first and second monomer mixtures also includes an unsaturated nitrile.

6. A process as claimed in any one of the preceding claims, wherein the monomers polymerised in the second polymerisation step are added directly to the reaction product of first step, without separation of residual monomer.

7. A process as claimed in any one of the preceding claims, wherein the amount of ethylenically unsaturated aromatic monomer added in the second step is from 10-30 wt%, based on total weight of second monomer mixture

8. A latex, preparable by polymerising a monomer mixture in a first polymerisation step to produce a first polymer latex, the first monomer mixture comprising:-
(i) from 23 to 65 wt % of an ethylenically unsaturated aromatic monomer,
(ii) from 0.5 to 7 wt% of an ethylenically unsaturated carboxylic acid, and
(iii) from 30-to 70 wt% of a conjugated diene,
the said percentages being based on the total of components (i), (ii) and (iii), and
(b) further polymerising a second monomer mixture in the presence of the first polymer latex in a second polymerisation step, the second monomer mixture comprising
(i) from 0 to 35 wt % of an ethylenically unsaturated aromatic monomer,
(ii) from 0.5 to 7 wt% of an ethylenically unsaturated carboxylic acid, and
(iii) an alkyl acrylate or alkyl methacrylate.

9. The use of a latex in accordance with claim 8, as a coating for a substrate to be coated by a rotogravure printing process.

10. A coated substrate for use in a rotogravure printing process, producible by coating a substrate with a latex according to claim 8.
